# EUROPEAN PATENT APPLICATION

(11) **EP 2 110 811 A1**
(43) Date of publication of application: **21.10.2009**
(21) Application number: 08007463.6
(22) Date of filing: 16.04.2008
(51) Int. Cl.: G11B 7/085

(54) **Sledge drive unit with tilt motor-axis**

(71) Applicant: Philips & Lite-On Digital Solutions Corporation, Neihu District Taipei (TW)
(72) Inventor: Kunze, Norbert, 35578 Wetzlar (DE); Müller, Stefan, 35578 Wetzlar (DE)
(74) Representative: Müller-Boré & Partner Patentanwälte

(57) **Abstract**

The present invention relates to a sledge drive unit which comprises a motor drive, a first spur gear, a second spur gear, and a gear rack, wherein the motor drive is provided with a worm as its rotation axis and the axis is tilted in an angle β₁ so that the angle between the axis of the worm and the axis of the first spur gear is 90-β₁ degree, in which the angle β₁ is equal to the helix angle of the worm, and the angle β₂ of the spur gear what is engaged with the worm is equal to 0°.

## Description

### Field of The Invention

The present invention relates to a novel sledge drive unit with a tilt motor-axis, particularly to a sledge drive unit for CD/DVD player with a tilt motor-axis.

### Background of the Invention

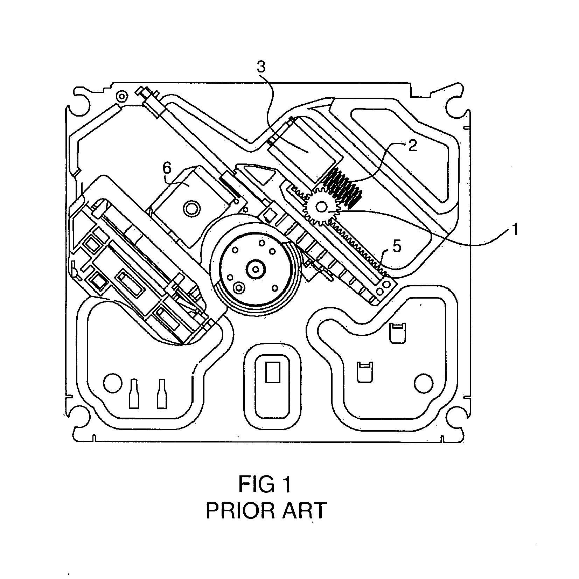

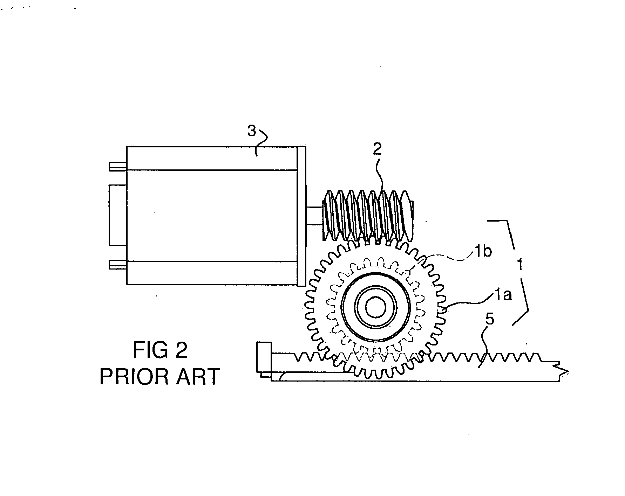

Conventional, an optical pick-up unit in CD/DVD player is driven by a sledge drive unit. FIG. 1 is a top view of a main module of a CD/DVD player and FIG. 2 is a top view of a sledge drive unit for driving an optical pick-up unit in a CD/DVD player. As shown in FIG 1, such a sledge drive unit is consisting of a spur gear 1 with a first spur gear l a and a second spur gear 1b to realize a ratio, a motor drive 3, and a gear rack 5, wherein the motor drive 3 is provided with a worm 2 as its rotation axis for engaging with the first spur gear 1a and the gear rack 5 is connected with an optical pick-up unit 6, wherein the second spur gear 1b is engaged with the gear rack 5. When the motor drive 3 drives the worm 2 to rotate, the first spur gear 1a is also rotated and thus the second spur gear 1b is rotated along the gear rack 5 and thus moves the optical pick-up unit 6.

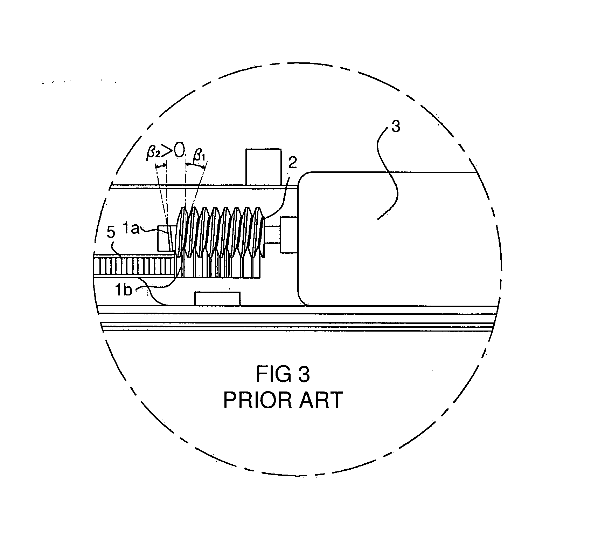

It is known that the axis of the worm 2 is always arranged perpendicularly to the axis of the first spur gear 1a with a pressure angle β₂>0°, as shown in FIG. 3. However, due to the perpendicular arrangement, the first spur gear 1a has to be as a good approximation a spur-gear with a pressure angle β₂>0° which is corresponding to the helix angle β₁ of the worm 2. These gears with a pressure angle β₂>0° are more complicated to produce than those with a pressure angle β₂=0°, especially when they have to be made of plastic material in molding technology. Another disadvantage associated with the perpendicular arrangement is that depending on the direction of rotation of the worm, the axial force applied to the first spur gear 1a changes in direction and is of different value, which leads to different degree of efficiency in both rotating directions and higher power consumption.

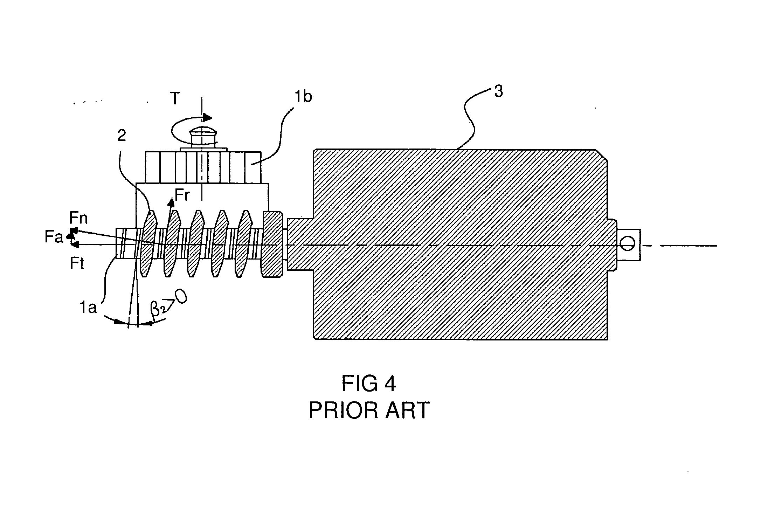

Please refer to FIG. 4, to obtain a certain torque T at the second spur gear 1b, a tangential force Ft has to be applied at a radius r0 of the first spur gear 1a. In case of the pressure angle β₂ of the first spur gear 1 a is >0°, the normal force Fn between the worm 2 and the tooth of the first spur gear 1a increases to Fn=Ft/cos(β₂). This leads to a higher friction-force Fr=Fn*µ (wherein µ is the coefficient of friction standing for the value of friction between two components) and thus to a higher load of the motor drive. In case of the pressure angle β₂>0°, the axial force Fa has influence on the total forces working in axial direction at the first spur gear 1a, the sum of axial forces is Fa+Fr. The higher the axial force applied to the first spur gear 1a is, the higher is the breaking force at the axial stops of the worm, what is friction between the bearing of the worm and the worm itself and thus to a lost of useable torque T at the second spur gear 1b. To regain this lost of torque the load of the motor drive has to be increased.

To resolve the above disadvantages, the present inventors have conducted an investigation on the structure of the sledge drive unit and thus completed the present invention.

### Summary of the Invention

The present invention relates to a sledge drive unit, which comprises a motor drive provided with a worm as its rotation axial; a gear rack; a first spur gear for engaging with the worm; and a second spur gear which is rotated together with the first spur gear and engaging with the gear rack and moving along the gear rack; the sledge drive unit is characterized that the axis of the worm is tilted in an angle β₁ so that the angle between the axis of the worm and the axis of the first spur gear is 90-β₁ degree, in which the angle β₁ is equal to the helix angle of the worm and the pressure angle β₂ of the first spur gear is equal to zero degree.

According to the sledge drive unit of the present invention, the gear rack is further connected with an optic pick-up unit.

According to the sledge drive unit of the present invention, the first spur gear and the second spur gear can be combined to one single component or divided in two separate parts.

According to the present invention, the sledge drive unit can be used in CD/DVD player or any application where a spur gear/worm wheel combination is required.

Accordingly, the present invention also relates to a CD/DVD player, which comprises a sledge drive unit for driving an optical pick-up unit, wherein the sledge drive unit comprises a motor drive provided with a worm as its rotation axial; a gear rack; an optical pick-up unit connected with the gear rack; a first spur gear for engaging with the worm; and a second spur gear which is rotating together with the first spur gear and engaging with the gear rack; wherein the first and the second spur gears are combined to one single component; thereby, when the worm of the motor drive is driven to rotate, the first spur gear and then the second spur gear rotate along the rack to move the optical pick-up unit; the sledge drive unit is characterized that the axis of the worm is tilted in an angle β₁ so that the angle between the axis of the worm and the axis of the first spur gear is 90-β₁ degree, in which the angle β₁ is equal to the helix angle of the worm and the pressure angle β₂ of the first spur gear is equal to zero degree.

According to the present invention, since the worm axis provided on the motor drive is tilted in an angle β₁ so that the angle between the axis of the worm and the axis of the first spur gear is 90-β₁ degree, in which the angle β₁ equals to the helix angle of the worm and the gear angle β₂ of the first spur gear is equal to zero degree, the gear teeth of the worm is parallel to the axis of the first spur gear so that the spur gear with a pressure angle β₂ =0° is easy to produce and the axial forces applied to the worm wheel are the same in both directions of rotating and have lower maximal value which leads to a more robust design.

In the present invention, the term "tilted in an angle β₁" used herein means the angle between the axis of the worm and axis of the spur gear reduced by 90°.

### Brief Description of Drawings

The present invention is illustrated more detail by reference to the accompanying drawings, wherein:
FIG. 1 is a top view of a main module of a CD/DVD player;
Figure 2 shows a top view of a sledge drive unit for driving an optical pick-up unit in CD/DVD player;
Figure 3 shows a side view of a conventional sledge drive unit viewed from a worm side;
Figure 4 shows a free-body diagram showing forces generated in the conventional sledge drive unit shown in Figure 3;
Figure 5 shows a side view of the sledge drive unit of the present invention viewed from a worm side; and
Figure 6 shows a free-body diagram showing forces generated in the present sledge drive unit shown in Figure 5.

### Detailed Description of the Invention

In the drawings, the same elements are represented by the same numerals.

The present invention relates to a sledge drive unit which comprises a motor drive provided with a worm as its rotation axis; a gear rack; a first spur gear for engaging with the worm; and a second spur gear which is rotated together with the first spur gear and engaging the gear rack and moving along the gear rack; the sledge drive unit is characterized that the axis of the worm is tilted in an angle β₁ so that the angle between the axis of the worm and the axis of the first spur gear is 90-β₁ degree, in which the angle β₁ is equal to the helix angle of the worm and the pressure angle β₂ of the first spur gear is equal to zero degree.

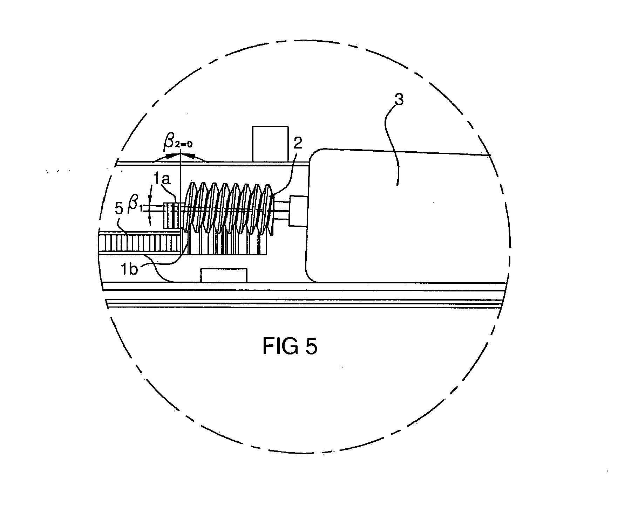

Figure 5 shows side view of the sledge drive unit of the present invention viewed from the worm side. The sledge drive unit of the present invention comprises a first spur gear 1a, a second spur gear 1b, a motor drive 3, and a gear rack 5, wherein the motor drive 3 is provided with a worm 2 as its rotation axis for engaging with the first spur gear 1 a, the first and the second spur gears are combined to one single component so that the second spur gear 1b is rotating together with the first spur gear 1a and is engaged with the gear rack 5. When the motor drive 3 drives the worm 2 to rotate, the first spur gear 1a is also rotated and thus the second spur gear 1b is rotated along the gear rack 5, the axis 3a of the worm 2 is tilted in an angle β₁ so that the angle between the axis of the worm and the axis of the first spur gear 1a is 90-β₁ degree, in which the angle β₁ equals to the helix angle of the worm 2 and the pressure angle β₂ of the first spur gear 1a is equal to zero degree.

According to the present invention, by tilting the rotation axis 3a in an angle β₁, the gear tooth of the worm 2 is parallel to the axis of the first spur gear 1a which pressure angle β₂ =0° so that the super gear is easy to produce and the axial forces applied to the first spur gear 1a are the same in both directions of rotating and have lower maximal value which leads to a more robust design.

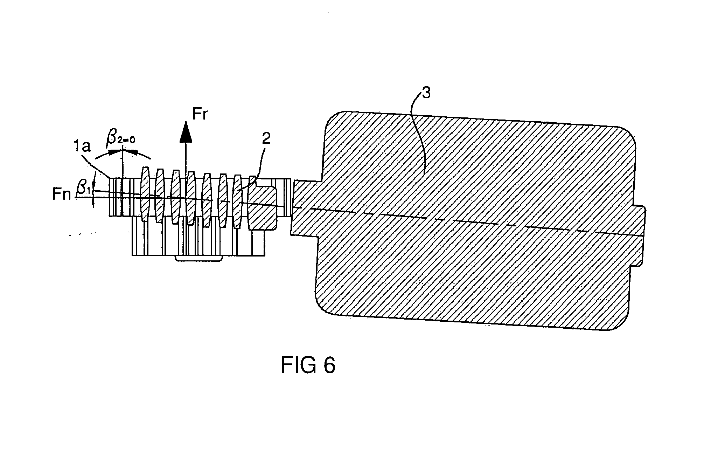

Please refer to FIG. 6 combining with FIG. 4, to obtain a certain torque T at the second spur gear 1b, a tangential force Ft has to be applied at a radius r0 of the first spur gear 1a. In case of the pressure angle β₂ is >0° (refer to FIG. 4), the normal force Fn between the worm 2 and the axis of the first spur gear 1a increases to Fn=Ft/cos(β₂). This leads to a higher friction-force Fr=Fn*µ (wherein µ is the coefficient of friction what stands for the value of friction between two components) and thus to a higher load of the motor drive 3. In case of the pressure angle β₂>0°, the axial force Fa has influence on the total forces working in axial direction at the first spur gear 1a, the sum of axial forces is Fa+Fr. The higher the axial force applied to the first spur gear 1a is, the higher is the breaking force at the axial stops of the worm wheel, what is friction between the bearing of the worm wheel and the worm wheel itself and thus to a lost of useable torque T at the second spur 1b. To regain this lost of torque the load of the motor drive 3 has to be increased. The sum of axial forces is Fa + Fr in one direction of rotating and Fa-Fr in the opposite direction of rotating and thus different for both directions. For the maximum force that direction with Fa+Fr is responsible.

Conversely, in the present invention, due to the pressure angle β₂ of the first spur gear 1a is equal to 0°, the axial force is Fr only (because Fa equals to 0) what leads to a lower maximum value of the axial force..

The friction-force Fr is the higher the normal-force Fn (directed perpendicular to the engaged surfaces) or the coefficient of friction µ is. The value of µ depends on the materials of both components sliding on each other and the roughness of these surfaces.

In summary from the above, using a spur gear of pressure angle β₂>0° leads to higher axial force applied to the spur gear and thus to higher load of the motor drive and also leads to a higher normal force at the tooth of the spur gear and thus to higher load of the motor drive as well.

But according to the present invention, by using a spur gear of pressure angle β₂=0° and tilting the axis of the worm in an angle β₁ so that the angle between the axis of the worm and the axis of the first spur gear is 90-β₁ degree, it leads to lower axial force applied to the spur gear and thus to lower load of the driving-motor and also leads to lower normal force at the tooth of the spur gear and thus to lower load of the driving-motor.

Although the sledge drive unit of the present application is illustrated with reference to the application used in CD/DVD player for driving an optical pick-up unit, the present sledge drive unit can be used in any application where a spur gear/worm combination is required.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A sledge drive unit, which comprises a motor drive provided with a worm as its rotation axis; a gear rack; a first spur gear for engaging with the worm; and a second spur gear which is rotated together with the first spur gear and engaging with and moving along the gear rack; the sledge drive unit is **characterized** that the axis of the worm is tilted in an angle β₁ so that the angle between the axis of the worm and the axis of the first spur gear is 90-β₁ degree, in which the angle β₁ is equal to the helix angle of the worm and the pressure angle β₂ of the first spur gear is equal to zero degree.

2. The sledge drive unit according to claim 1, wherein the first spur gear and the second spur gear are combined to one single component.

3. The sledge drive unit according to claim 1, wherein the first spur gear and the second spur gear are divided in two separate parts.

4. The sledge drive unit according to any one of the preceding claims, wherein the gear rack is further connected with an optic pick-up unit.

5. A CD/DVD player, which comprises a sledge drive unit for driving an optical pick-up unit, wherein the sledge drive unit comprises a motor drive provided with a worm as its rotation axis; a gear rack; an optical pick-up unit connected with the gear rack; a first spur gear for engaging with the worm; and a second spur gear which is rotating together with the first spur gear and engaging with the gear rack; thereby, when the worm of the motor drive is driven to rotate, the first and the second spur gears also rotate along the rack to move the optical pick-up unit; the CD/DVD player is **characterized** that in the sledge drive unit the axis of the worm is tilted in an angle β₁ so that the angle between the axis of the worm and the axis of the first spur gear is 90-β₁ degree, in which the angle β₁ is equal to the helix angle of the worm and the tooth angle β₂ of the first spur gear is equal to zero degree.

6. The CD/DVD player according to claim 5, wherein the first spur gear and the second spur gear in the sledge drive unit are combined to one single component.

7. The CD/DVD player according to claim 5, wherein the first spur gear and the second spur gear in the sledge drive unit are divided in two separate parts.
